# EUROPEAN PATENT APPLICATION

(11) **EP 1 122 902 A1**
(43) Date of publication of application: **08.08.2001**
(21) Application number: 00311041.8
(22) Date of filing: 11.12.2000
(51) Int. Cl.: H04H 9/00

(54) **Audience research system by analyzing the remote control signals**

(30) Priority: 09.12.1999 GB 9929011
(71) Applicant: Pace Micro Technology Ltd, Saltaire, Shipley BD18 3LF (GB)
(72) Inventor: Smith, Gerard, Saltaire, Shipley, BD18 3LF (GB)
(74) Representative: Wood, Graham

(57) **Abstract**

A television system is provided which includes a display means having a number of selectable channels and a digital data receiver connected thereto. Data is transmitted from the receiver to the television for viewing when a designated television channel is selected. The system further includes a remote control device, which can be selectively used to control the television set and receiver functions and, if a function selection is made with respect to the television set, an indicative signal is also sent to the receiver.

## Description

The invention which is the subject of this application is related to the usage of a television which is connected with a broadcast data receiver and to the ability for the broadcaster to obtain an indication as to the usage of the apparatus by the users and/or subscribers of services provided to them.

Increasingly there is an expanding choice of programmes which can be selected to be watched and, furthermore there is an increase in the number of users who have a television set which includes a receiver for terrestrial analogue data signals which are received via conventional aerials mounted on the premises and which television set is also connected to a receiver which can receive digital broadcast data which can also be received via the aerial or via cable or satellite systems.

In use the television set is normally provided with a series of channel selectors and one of the channels is tuned to receive a signal from the digital data receiver. In turn the receiver can be selectively tuned to receive a number of channels. Thus, in use if a user wishes to view one of the digital channels they first select the television to the digital receiver channel and then select the appropriate channel on the digital data receiver. They can then proceed to alter the digital channels without the need to alter the television setting and equally, if the user wishes to watch one of the conventional analogue channels, they need only alter the television set to the correct channel.

Most television channels now rely on adverts to gain revenue and many advertisers and broadcasters wish to be able to gauge the exposure to the adverts so as to be able to identify the best channels on which to advertise, the best times to advertise and so on. There is therefore a considerable demand on the broadcaster to be able to provide feedback information which illustrates the user watching habits. As most digital data receivers are connected to a communications link which allows the transfer of data from the receiver there is a means whereby data for the receiver can be sent to the broadcaster. It is also known to be able to send data which gauges the control usage of the digital data receiver and this information is of some use to the broadcaster. However the problem is that although the digital data receiver may have changed condition the broadcaster or advertiser cannot be sure that the television set connected to the receiver was actually set at the correct channel to allow the signal from the digital data receiver to be seen.

The aim of the present invention is to provide a system in which the control and usage of a television set and digital data receiver can be monitored in a manner which allows the data to be truly indicative of the usage of the apparatus by the user and thereby provide the broadcaster and other interested parties with data which can be used in subsequent analysis.

In a first aspect of the invention there is provided a television system, said system including a television set having a number of selectable channels and a digital data receiver connected thereto, data being transmitted from the receiver to the television and viewable when a designated television channel is selected on the television set and characterised in that said system includes a remote control device which can be selectively used to control the television set and receiver functions and, if a function selection is made with respect to the television set, an indicative signal is also transmitted to the receiver to indicate said change of function of the television set.

This aspect of the invention ensures that the receiver receives at least an indication of all signals which are generated from the remote control regardless of whether they are for controlling the television or receiver. In one embodiment the receiver includes a memory in which the received signals are stored and then at intervals, and/or upon demand from the broadcaster or other interested party the data from the memory is transferred via a communications link between the receiver and a designated remote location.

As the recipient of the data receives data relating to all control signals sent by the remote control device they can generate a more detailed and accurate picture of the usage of the apparatus.

In a preferred embodiment the control signals generated from the remote control to control the television are distinguishable from those generated for the receiver.

In one preferred embodiment the remote control has a processing function to be able to distinguish the control functions selected. For example if a button is pressed for a prolonged period of time the remote control can identify the function, gauge the length of the depression of that button and then generate and transmit a signal to the receiver which is indicative of that function.

In a further embodiment the remote control device may include a memory in which a plurality of function selection data is held and is then transmitted to the receiver at intervals. Alternatively the data which is held in the buffer is transmitted on every occasion when a signal is sent from the remote control to the receiver thus ensuring that the receiver receives the data. In this embodiment the block of data is stored in the memory of the receiver for subsequent transmission.

In addition to logging the function selections made, it is preferred that the receiver memory and/or remote control memory include a means of indicating the time at which the selection was made as this is also important information for the analysis of such data. Thus, the system can record the time at which a function selection is made by the remote control, preferably within the memory of the remote control and said information can subsequently be transmitted to the receiver at a time thereafter in conjunction with the function selection identification data. Thus the receiver can then store, over time, both information relating to the particular function selection made, whether the function selection was with respect to the television or receiver and the time at which the function selection was made.

In a further aspect of the invention there is provided a television system comprising a television set with a number of selectable channels, said television set connected to a receiver for receiving broadcast data and characterised in that said receiver is provided with a means for receiving data relating to the usage and selection of functions on the television set and said data is received via a SCART connection between the television set and the receiver.

In this embodiment if the material being watched and listened to on the television set is not from the receiver, i.e. when another channel has been selected, the video and audio signals for that material are transmitted to the receiver via the SCART connection. The receiver is provided with a processor which allows the Vertical Blanking Interval of the data to be sampled to access data which can be used to identify the channel which is being watched on the television set. This identification can be stored and, if required, time stamped, and then transmitted along with other data to provide a picture of usage of the television set and the receiver.

In a further embodiment, if the audio or volume control of the television set is altered the amplitude of the signal received via the SCART lead will change and therefore allow this to be processed and stored.

It is envisaged that this aspect of the invention can be utilised independently or in conjunction with the subject matter of the first aspect. Alternatively there can be provided a system which allows for the recording of data indicative of the selection of functions of the receiver which can be relatively easily collected and this, in conjunction with the data received via the SCART connection allows analysis of the data to assess when the material from the receiver was actually being watched on the television set and, if not, whether one of the other channels on the television set had been selected for viewing.

Specific embodiments of the invention is now described with reference to the accompanying drawings wherein
Figure 1 illustrates a system in accordance with a first aspect of the invention; and
Figure2 illustrates a system in accordance with a second aspect of the invention.

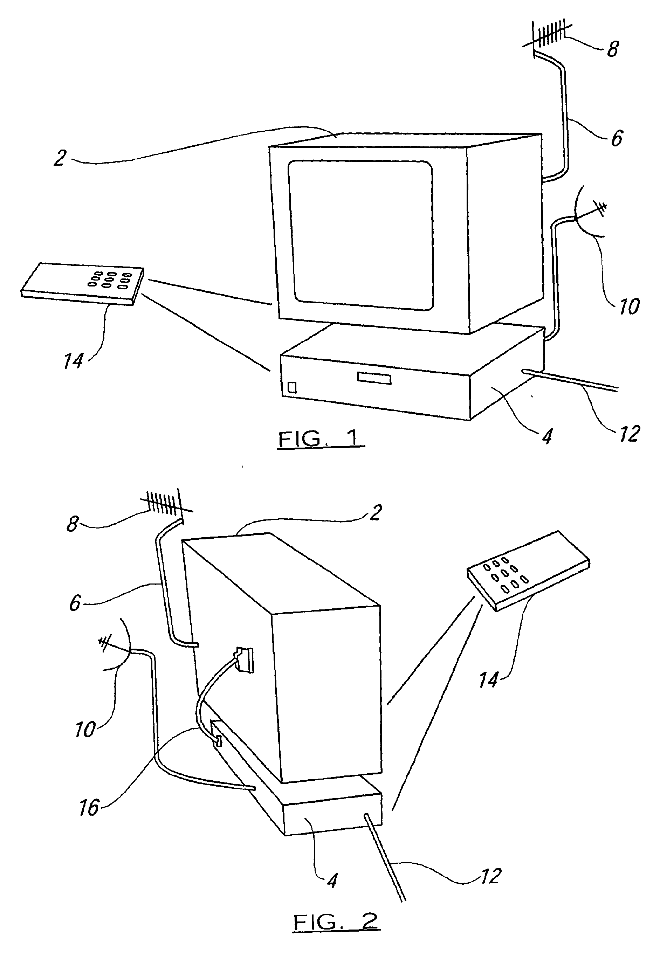

Referring firstly to Figure 1 there is illustrated a television system comprising a television set 2 and a receiver 4. The television set 2 includes a means for receiving and processing analogue signals which are received via cable 6 and aerial 8. Typically, the channels received via this are what are known as terrestrial channels. The receiver 4 is provided with a means for processing digital data received, in this case, via a satellite dish 10. Thus it will be appreciated that there are provided two differing forms for receiving data from which television channels can be generated and watched via the television set. The receiver is also provided with a communications link 12 which allows data to be transmitted from the receiver to a remote location.

Both the television set and the receiver are provided with means to receive signals emitted from a remote control device 14 and the signals, when received by the apparatus and of the appropriate configuration, allow the user to change the functions of the apparatus such as to select the channel to be viewed, change volume and so on. In this case the remote control can be selectively used to control both the television set and the receiver.

Data relating to the selection of functions of the receiver by use of the remote control can be collected and stored in memory in the receiver for subsequent transmission via the communications link 12 to the remote location which may be a broadcaster or other data analysis centre. However the problem is that although the function of the receiver may be monitored, there is currently no way of being sure that the user was actually watching the signal from the receiver at that time via the television set. The current invention solves this problem.

In the embodiment of Figure 1 the television set function changes can also be monitored as each control function sent by the remote control to the television set is also received by the receiver. This can be achieved by reproducing the signal in a form so that it can be received, identified and logged by the receiver in memory, or alternatively the signals generated can be stored in a memory in the remote control, date stamped and then transmitted as a block at a designated time, or when a signal is next sent to the receiver from the remote control.

There are a number of different features and activities which can be monitored using this system and some of these are set out below for the purpose of example.

If in one embodiment the user presses the mute key of the remote control (RC), with the RC in TV mode, the command would be first be sent to the TV and then after that, it would be sent to the receiver. In each case, it would need to be sent in the standard appropriate for the receiving device.

If a button is pressed and held down (e.g. the volume control) an initial command can be sent and then followed by repeat codes for the duration of the button press. Here the command sequence can not be interrupted while the button is being pressed. The RC can record the button press and also measure the duration of the press. Then, once the button has been released, the RC can send the details of the button pressed and the duration of the press to the set top box.

In one embodiment the RC includes a memory buffer of say 16 of the most recently transmitted TV commands. These buffered TV commands would then be sent to the receiver every time the user presses any button on the RC for the receiver control.

When a buffer is used in this way, the receiver needs to know which of the received commands are new and which it has received before. To provide this information the RC can send a buffer status word which indicates whether the buffer contents have been changed since they were last received and how many new commands have been added. The status word, would effectively be a rolling count of TV control button presses. It would also provide the added feature of indicating the number of commands that where sent to the TV but not successfully relayed to the receiver and provide the party undertaking the analysis of the data with an accuracy rating for the data collected by individual receivers.

The inclusion of a buffer in the RC can also provide a time stamp on each button TV control button press, via a time keeping circuit in the RC handset.

An alternative solution is to transmit TV control button press information to the receiver after the button has been pressed. Then whenever a receiver command is sent to the receiver, it is followed by a count of the number of TV button presses that have occurred. This would allow the set top box to calculate the percentage of TV button presses that it has successfully received and therefore indicate to the analysing party the accuracy of the data for each individual installation.

Figure 2 illustrates an alternative embodiment for transferring data relating to the television function to the receiver. Using the same reference numerals for parts common to Figure 1, in Figure 2 the system allows the receiver 4 to determine which terrestrial program is being displayed on the TV 2 and can also, if required, determine the audio level.

Data in the Vertical Blanking Interval (VBI) of a terrestrial broadcast can be used in order to identify the broadcaster and the channel. The receiver 4 is connected to the TV 2 via a SCART lead 16 and if the TV is set to allow viewing of a terrestrial transmission, the video and audio signals are sent down the SCART lead to the receiver. Inside the receiver there is a processing capability to sample the VBI and extract the data necessary to identify the terrestrial channel. Also, as the amplitude of the audio signal on the SCART lead varies as the TV volume is adjusted, measuring this amplitude can indicate the volume level on the TV.

In the embodiments of the invention the set top box has the ability to monitor selection functions of the television set and so a range of information can be extracted from the data which is transmitted to the remote party who wishes to analyse the data. Examples of the information which can be derived are now given:
1. Is the TV On or Off?
   If the standby button is pressed without further RC activity then the TV has probably been switched off. On the other hand, if the standby button is pressed followed by further RC activity then the TV has probably been switched on. Other RC activity such as channel selection could also indicate that the TV has been turned on.
2. What is the Volume Level?
   Approximate volume levels could be determined by monitoring volume adjustments. It may be that advertisers are more interested in volume adjustments rather than absolute volume levels, because they indicate how advertisements affect viewer's behaviour.
3. Is the receiver program being displayed on TV? It is possible to determine whether the receiver output is being displayed on the TV. This can be achieved by monitoring a combination of TV and receiver RC commands in order to determine which channel / AV input on the TV is used to view the set top box output. While RC is being used to control the receiver, it is highly likely that the receiver output is displayed on the TV.

1. Is somebody watching the TV or is it playing to an empty room.
   If there is RC activity during a program (e.g. volume adjustments) then it was probably watched. Or if there was activity at the start and end of a film then again it was probably watched. However if one channel was left selected without RC activity then the probability of it being watched is lower. This information is quite fuzzy, but it may have value to somebody.
2. Which terrestrial channel is being watched?
   Here we need to work out which TV channels correspond to which terrestrial broadcast. This could be achieved by monitoring remote control activity and comparing it with information supplied from the digital broadcaster. This information would be terrestrial program start and finish times and maybe advert times, as these are times when the remote control unit is likely to be used on a given channel. To allow for unpredictable remote control use this information would need to be developed over a period of time. But once the receiver has worked out which RC button selects a particular broadcast channel, the process of monitoring terrestrial viewing is simplified. This technique would require some cooperation between broadcasters.

It should also be appreciated that although reference is made to the use of a single remote control to control both the television set and receiver, more than one remote control may be used, i.e. one for the television set and one for the receiver. In this case both remote control device can be used but the device for the television set is also provided with means to transmit data relating to the function selections made via the device for the television set to be transmitted to the receiver. In addition or alternatively, the receiver can monitor function changes of the television set via the SCART connection between the television set and receiver as herein described. Thus, it should be appreciated that although reference is made herein to a single remote control device, the invention as herein described can be achieved and performed with the use of more than one remote control device to control functions of the television set and/or receiver and the application should be interpreted as such.

## Claims

1. A television system, said system including a television set having a number of selectable channels and a digital data receiver connected thereto, data being transmitted from the receiver to the television and viewable when a designated television channel is selected on the television set and characterised in that said system includes a remote control device which can be selectively used to control the television set and receiver functions and, if a function selection is made with respect to the television set, an indicative signal is also transmitted to the receiver to indicate said change of function of the television set.

2. A television system according to claim 1 characterised in that the receiver includes a memory in which the received remote control signals are stored.

3. A television system according to claim 2 characterised in that the received signal data stored in the receiver is transferred via a communications link between the receiver and a designated remote location at intervals and/or upon demand.

4. A television system according to claim 1 characterised in that the control signals generated from the remote control to control the television set are distinguishable from the control signals generated for the receiver.

5. A television system according to claim 4 characterised in that the remote control has a processing function to distinguish the control functions selected.

6. A television system according to claim 5 characterised in that the processing function can determine the length of depression of a button on the remote control.

7. A television system according to claim 5 characterised in that the processing function can generate and transmit a signal to the receiver indicative of the control function selected.

8. A television system according to claim 1 characterised in that the remote control device includes a memory in which function selection data is held and is transmitted to the receiver at intervals.

9. A television system according to claim 1 characterised in that the remote control transmits function selection data to the receiver on every occasion when a signal is sent from the remote control to the receiver.

10. A television system according to claim 1 characterised in that the time at which a function selection is made by the remote control is recorded in the remote control and said information transmitted to the receiver at a time thereafter in conjunction with the function selection identification data.

11. A television system, said system including a television set having a number of selectable channels, said television set connected to a receiver for receiving broadcast digital data and characterised in that said receiver is provided with a means for receiving data relating to the usage and selection of functions on the television set and said data is received via a SCART connection between the television set and the receiver.

12. A television system according to claim 10 characterised in that the receiver is provided with a processor to allow the vertical blanking interval of the television data to be sampled.

13. A television system according to claim 10 characterised in that the time at which the data is received is transmitted with the data to provide a record of usage of the television set.

14. A television system according to claim 10 characterised in that alteration of the audio or volume control of the television system results in alteration of the amplitude of the data signal received via the SCART connection.

15. A television system, said system including a television set having a number of selectable channels and a digital data receiver connected thereto, data transmitted from the receiver to the television or from the television to the receiver, said system including a remote control device which can be selectively used to control the television set and receiver functions and, if a function selection is made with respect to the television set using the remote control, an indicative signal is sent to the receiver, and a SCART connection is provided which connects the television and receiver to enable the receiver to receive data directly from the television set relating to the usage and selection of functions on the television set.

16. A television system according to claim 15 characterised in that the receiver receives data from both the remote control and from the SCART connection to provide information on whether the television is being used to watch data received via the receiver or data received from a different source.
